# EUROPÄISCHE PATENTSCHRIFT

(11) **EP 0 960 447 B1**
(45) Veröffentlichungstag und Bekanntmachung des Hinweises auf die Patenterteilung: **21.11.2001**
(21) Anmeldenummer: 98905411.9
(22) Anmeldetag: 06.02.1998
(51) Int. Cl.: H01M 8/02

(54) **INTERKONNEKTOR FÜR SOFC-BRENNSTOFFZELLENSTAPEL**
INTERCONNECTOR FOR SOFC FUEL CELL PILES
INTERCONNECTEUR POUR PILES A COMBUSTIBLE SOFC EMPILEES

(30) Priorität: 15.02.1997 DE 19705874
(43) Veröffentlichungstag der Anmeldung: 01.12.1999
(73) Patentinhaber: FORSCHUNGSZENTRUM JÜLICH GMBH, 52425 Jülich (DE)
(72) Erfinder: DIEKMANN, Uwe, D-52072 Aachen (DE); RINGEL, Helmut, D-52382 Hambach (DE)
(74) Vertreter: Rox, Thomas
(86) Internationale Anmeldenummer: EP9800662
(87) Internationale Veröffentlichungsnummer: WO9836464

(56) Entgegenhaltungen:
- EP-A- 0 432 381
- EP-A- 0 446 680
- WO-A-92/16029
- DE-A- 4 016 157
- CHEMICAL ABSTRACTS, vol. 127, no. 2, 14.Juli 1997 Columbus, Ohio, US; abstract no. 20908, FUJITA YOJI: "Molten carbonate fuel cells " XP002068067 & JP 09 092 306 A (MITSUBISHI ELECTRIC CORP) 4.April 1997
- PATENT ABSTRACTS OF JAPAN vol. 095, no. 009, 31.Oktober 1995 -& JP 07 145454 A (SUMITOMO SPECIAL METALS CO LTD), 6.Juni 1995, -& DATABASE WPI Derwent Publications Ltd., London, GB; AN 95-237398 XP002067926
- PATENT ABSTRACTS OF JAPAN vol. 018, no. 668 (C-1289), 16.Dezember 1994 -& JP 06 264193 A (SUMITOMO METAL IND LTD), 20.September 1994, -& DATABASE WPI Derwent Publications Ltd., London, GB; AN 94-338638 XP002067927
- PATENT ABSTRACTS OF JAPAN vol. 015, no. 118 (E-1048), 22.März 1991 -& JP 03 008264 A (SANYO ELECTRIC CO LTD), 16.Januar 1991,

## Beschreibung

Die Erfindung betrifft einen Stromkollektor für SOFC-Brennstoffzellenstapel mit den Merkmalen des Oberbegriffs des Anspruches 1.

Ein Brennstoffzellenstapel weist als wesentliche Bestandteile mehrere Brennstoffzellen auf. Eine Brennstoffzelle wiederum ist aus einer Kathode, einem Elektrolyten sowie einer Anode zusammengesetzt. Der Kathode wird ein Oxidationsmittel, z. B. Luft und der Anode wird ein Brennstoff, z. B. Wasserstoff zugeführt. Brennstoff sowie Oxidationsmittel werden im folgenden allgemein Betriebsmittel genannt.

Es gibt verschiedene Brennstoffzellentypen; z. B. die SOFC-Brennstoffzelle, die auch Hochtemperatur-Brennstoffzelle genannt wird, da ihre Betriebstemperatur bis zu 1000 °C beträgt.

An der Kathode einer Hochtemperatur-Brennstoffzelle bilden sich in Anwesenheit des Oxidationsmittels Sauerstoffionen. Die Sauerstoffionen passieren den Elektrolyten und rekombinieren auf der Anodenseite mit dem vom Brennstoff stammenden Wasserstoff zu Wasser. Mit der Rekombination werden Elektronen freigesetzt und so elektrische Energie erzeugt.

Eine SOFC-Brennstoffzelle weist einen Feststoffelektrolyt auf, der O²⁻-Ionen, aber keine Elektronen leitet. Dabei wird üblicherweise Yttrium stabilisiertes Zirkoniumoxid, YSZ, als Material für den Feststoffelektrolyten verwendet.

Zur Erzielung großer Leistungen werden mehrere Brennstoffzellen aufeinander gestapelt und elektrisch seriell miteinander verbunden. Das verbindende Element zweier Brennstoffzellen, der Stromkollektor, ist unter der Bezeichnung Interkonnektor, bekannt. Es bewirkt die elektrische sowie die mechanische Kopplung zweier Brennstoffzellen. Ferner dient das verbindende Element der Bildung von Kathoden- oder Anodenräumen. In einem Kathodenraum befindet sich eine Kathode. In einem Anodenraum befindet sich eine Anode. Derart gestapelte Brennstoffzellen werden Brennstoffzellenstapel genannt.

Aus dem Stand der Technik ist ein Stromkollektor bekannt, der aus einem keramischen Material, beispielsweise aus Lanthanchromit (LaCrO₃) besteht. Dieser Stromkollektor weist zwar bei hohen Temperaturen eine geeignete elektrische Leitfähigkeit auf und läßt sich auch gut an das thermische Ausdehnungsverhalten der Zellenwerkstoffe des Brennstoffzellenstapels anpassen. Jedoch ist das keramische Material sehr teuer und läßt sich zudem nur aufwendig zu Stromkollektoren verarbeiten. Dadurch entstehen zudem hohe Herstellungskosten.

Weiterhin ist aus dem Stand der Technik ein Stromkollektor bekannt, der aus einem metallischen Werkstoff hergestellt ist. Dabei wird vorzugsweise eine hitzebeständige ferritische Legierung wie beispielsweise Cr5Fe1Y₂O₃ verwendet. In Folge der hohen Betriebstemperaturen verbunden mit einem hohen O₂-Partialdruck auf der Kathodenseite bildet sich auf dem metallischen Stromkollektormaterial eine Oxidschicht.

An diese Oxidschicht sind nun hohe Anforderungen an die Hochtemperaturbeständigkeit und Leitfähigkeit zu stellen. Diese Anforderungen werden im Stand der Technik nur von Chromoxidschichten erfüllt. Diese weisen jedoch wiederum den Nachteil auf, daß durch die Abdampfung von Chromoxiden unter den gegebenen Hochtemperatur-Betriebsbedingungen insbesondere die Kathode geschädigt wird. Im Stand der Technik wird daher kathodenseitig eine Beschichtung mit einer speziellen, ganzflächigen Sperrschicht, bspw. aus LaCrO₃ vorgesehen, die ein Abdampfen der Chromoxide verhindert.

Aus dem Stand der Technik ist weiterhin bekannt, daß durch Zugabe von Aluminium die Legierung eine Deckschicht aus Al₂O₃ ausbildet. Diese Deckschicht wiederum ist stabiler als die Chromoxiddeckschicht, jedoch weist die Deckschicht aus Al₂O₃ nur eine verschwindende elektrische Leitfähigkeit auf.

Die EP 0 432 381 A1, von der die vorliegende Erfindung ausgeht, offenbart eine Bauteilanordnung zur Stromführung zwischen benachbarten Brennstoffzellen. Diese Anordnung weist eine die gasförmigen Brennstoffe separierende elektrisch leitende Trennplatte und beidseits von ihr angeordnete Kontaktelemente auf. Diese stellen den elektrisch leitenden Kontakt zwischen Elektroden der Brennstoffzellen und der Trennplatte her. Die Kontaktelemente sind in Form eines gewellten Bandes ausgestaltet, so daß sie die Führungskanäle für die Führung von Brennstoffen aufspannen, während die Trennplatte als Grundkörper eben ausgebildet ist und die Führungskanäle nur einseitig begrenzt. Die EP 0 432 381 A1 offenbart weiterhin, daß der Grundkörper aus einer ferritischen Legierung besteht, die Chrom enthält und einen Aluminumgehalt von 4,5 Gew.-% aufweist. Dagegen besteht das Kontaktelement aus einer ferritischen Legierung, die ebenfalls Chrom enthält, deren Aluminiumgehalt jedoch nur 1,5 Gew.-% beträgt.

Die EP 0 446 680 A1 offenbart einen Stromkollektor zur Stromführung zwischen benachbart angeordneten Hochtemperatur-Brennstoffzellen, bei dem der Grundkörper und das Kontaktelement aus separaten Elementen bestehen. Als Werkstoff für sowohl den Grundkörper als auch das Kontaktelement dient eine ferritische Legierung, die Chrom und einen Aluminiumgehalt vom 5 Gew.-% aufweist. Die eigentlichen elektrischen Kontaktstellen zwischen einer Elektrode einer Brennstoffzelle und dem Kontaktelement bestehen aus einem porösen Platin-Tropfen, der an geeigneten Stellen auf das Kontaktelement aufgesintert worden ist. Durch den Sinterprozeß entsteht eine feste Verbindung zwischen dem Platin-Tropfen und der ferritischen Legierung des Kontaktelementes.

Die DE 40 16 157 offenbart einen Stromkollektor, der ebenfalls aus einer Trennplatte und einem separaten Kontaktelement besteht. Die Trennplatte ist aus einem hitzebeständigen Cr/Al-Stahl hergestellt und weist einen Aluminiumgehalt von 1 Gew.-% auf. Das Kontaktelement dagegen besteht aus einer Eisenbasislegierung mit einem Aluminiumgehalt von 5 Gew.-%.

Die DE 195 32 791 A1 offenbart einen Stromkollektor mit einem Grundmaterial, das ein hoch korrosionsresistentes Metall oder eine entsprechende Metallegierung ist. Das bestehende Problem, das während des Betriebes sich an der Oberfläche des Stromkollektors eine Oxidschicht entsteht, die einen hohen elektrischen Widerstand aufweist, wird dadurch gelöst, daß zwischen dem Grundmaterial des Stromkollektors an den Berührungsstellen zwischen dem Stromkollektor und der Elektrode dünne Schichten aus einem inerten, eine hohe elektrische Leitfähigkeit aufweisenden Metall vorgesehen sind. An diesen Kontaktstellen tritt keine Korrosion auf, so daß der niedrige Übergangswiderstand erhalten bleibt. Dieser Stand der Technik weist jedoch den Nachteil auf, daß zum einen teure Materialien in nicht unerheblichem Umfang verwendet werden und daß zum anderen verschiedenartige Materialien an für die Funktionstüchtigkeit des gesamten Brennstoffzellenstapels wichtigen Stellen miteinander verbunden werden müssen. Daher besteht die Gefahr einer Ablösung zwischen den verschiedenen Materialien, so daß Risse und Spalten entstehen können, die die gesamte elektrische Leitfähigkeit des Stromkollektors erheblich reduzieren. Als Grundmaterial des zuvor beschriebenen Stromkollektors wird in der DE 195 32 791 A1 aluminiumhaltiger oder hochchromhaltiger Edelstahl vorgeschlagen. Die dünnen Schichten dagegen bestehen, aus Gold, Silber oder Platin.

Weiterhin ist aus dem Stand der Technik der DE 195 34 047 C1 ein Stromkollektor für eine Brennstoffzelle mit einer Schichtstruktur bekannt. Von den mehreren Schichten besteht eine erste Schicht aus einem ersten Metall und wenigstens eine zweite Schicht aus einer intermetallischen Verbindung des ersten Metalls mit einem zweiten Metall. Damit wird unter anderem erreicht, daß ein guter elektrischer Kontakt des Stromkollektors mit der entsprechenden Elektrode gewährleistet bleibt, indem die Oberfläche aus einem preisgünstigen korrosionsbeständigen Material besteht.

Der Erfindung liegt daher das technische Problem zugrunde, einen Stromkollektor anzugeben, bei dem das Abdampfen von Chromoxiden weitgehend unterdrückt wird und gleichzeitig eine ausreichende elektrische Leitfähigkeit der Kontaktstellen zwischen Stromkollektor und den Elektroden gewährleistet wird.

Das zuvor angeführte technische Problem wird erfindungsgemäß durch einen Stromkollektor nach Anspruch 1 gelöst. Erfindungsgemäß ist erkannt worden, daß die Anforderungen an die Leitfähigkeit der Oxidschicht nur im Bereich der den elektrischen Kontakt herstellenden Kontaktelementen gestellt werden müssen. Dagegen sind in den Bereichen der übrigen Oberfläche die Anforderungen an die Oxidschicht entgegengesetzt, da hier nicht die elektrische Leitfähigkeit wesentlich ist, sondern die möglichst stabile Oberfläche.

Daher wird vorgeschlagen, daß nur die Legierung der Kontaktelemente einen Aluminiumgehalt von weniger als 2.0 Masse-% aufweisen. In vorteilhafter Weise wird dadurch sichergestellt, daß sich an der Oberfläche des Kontaktelementes nur in sehr geringem Umfang eine Al₂O₃-Schicht bildet, die somit nicht den elektrischen Kontakt mit einer der Kathoden der Brennstoffzelle erschwert. Die Legierung des übrigen Grundkörpers des Stromkollektors weist dagegen einen Aluminiumgehalt von mehr als 2.0 Masse% auf, so daß sich in jedem Fall auf der Oberfläche des Grundkörpers eine Al₂O₃-Schicht bildet.

Diese Al₂O₃-Schicht ist stabil gegenüber der sie umgebenden Atmosphäre und gewährleistet, daß gar nicht oder nur in geringem Maße Chromoxide aus dem Stromkollektor austreten. Dadurch wird nicht zuletzt die Beständigkeit der Elektroden der Brennstoffzelle verbessert.

Erfindungsgemäß werden die Kontaktelemente mittels einer stoffschlüssigen Verbindung mit dem Grundkörper des Stromkollektors verbunden. Dabei finden beispielsweise Schweißen, Auftragsschweißen oder Löten Anwendung. Die Verbindungszone enthält dabei in vorteilhafter Weise Sperrschichten, die eine Interdiffusion des Aluminiums zwischen den Legierungen unterdrücken.

In bevorzugter Weise weist nun die Legierung des Kontaktelementes einen Aluminumgehalt von weniger als 1,5 bzw. 1,0 Masse-% auf. Dieses folgt der Erkenntnis, daß mit geringer werdendem Aluminumgehalt die Neigung der Legierung zur Al₂O₃Schichtbildung abnimmt. Unterhalb von 1,0 Masse-% ist davon auszugehen, daß keine Al₂O₃-Schicht mehr auf der Oberfläche der Legierung gebildet wird.

In bevorzugter Weise bestehen die Legierungen aus einer hitzebeständigen ferritischen Legierung, die sich in geeigneter Weise an das Temperaturausdehnungsverhalten der übrigen Materialien des Brennstoffzellenstapels anpassen lassen und zudem eine geeignete Formstabilität gewährleisten, so daß die mechanische Integrität des Brennstoffzellenstapels sichergestellt werden kann.

Mit dem zuvor beschriebenen Stromkollektor läßt sich nun ein Brennstoffzellenstapel aufbauen. Dabei dient - wie oben beschrieben - der Stromkollektor nicht nur für die Leitung der Brennstoffe für die Brennstoffzellen, sondern auch für die Leitung des durch die Brennstoffzellen erzeugten Stromes.

Die Kontaktelemente eines Stromkollektors stehen daher im zusammengebauten Zustand des Brennstoffzellenstapels im wesentlichen vollständig mit einer Elektrode einer Brennstoffzelle in elektrisch leitendem Kontakt. Da das Kontaktelement aufgrund der geforderten elektrischen Leitfähigkeit nur einen geringen Aluminiumgehalt aufweist, bildet sich an der Oberfläche der Kontaktelemente eine Chromoxidschicht. Aus dieser Schicht treten der Chromoxide aus und führen somit zu einer Verunreinigung und sogar möglicherweise zu einer Zerstörung der Kathoden. Dieses kann auch durch den ansonsten im Grundkörper vorhandenen höheren Aluminiumgehalt und dem dadurch erfolgten Schutz gegenüber dem Austreten von Chromoxiden nicht verhindert werden.

Daher ist in bevorzugter Weise die Kontaktstelle des Kontaktelementes des Stromkollektors mit der Elektrode mit einer Umhüllung umgeben. Diese schützt das Kontaktelement vor der vorhandenen Atmosphäre, so daß aus der Oberfläche keine schädlichen Chromoxide austreten können. Weiterhin besteht die Isolierung in bevorzugter Weise aus einer elektrisch leitenden Keramik, z.B. Lanthanchromit (LaCrO₃₎.

Die Vorteile der erfindungsgemäßen Ausgestaltung des Stromkollektors bestehen darin, daß zunächst keine isolierende Zwischenschichten trotz der Verwendung eines Stromkollektormaterials mit einem hohen Aluminiumgebalt auftreten, da an den kritischen Stellen der Kontakt durch eine Legierung mit niedrigem Aluminiumgehalt hergestellt wird.

Weiterhin wird eine Hochtemperaturbeständigkeit des Stromkollektors durch den Einsatz des kostengünstigen Legierungs-elementes Aluminium erreicht, wobei der Aluminiumgehalt im wesentlichen zwischen 1,0 und 6,0 Masse-% liegt.

Schließlich kann eine Chromoxidverdampfung nur an den Kontaktelementen des Stromkollektors auftreten, da der Grundkörper von einer dichten Aluminiumoxidschicht umgeben wird. Die Gefahr einer lokalen Chromoxidverdampfung an den Kontaktelementen kann jedoch wirksam durch eine umgebende Kontaktschicht verringert werden.

Im folgenden wird die Erfindung anhand eines Ausführungsbeispiels näher erläutert, wobei auf die Zeichnung Bezug genommen wird. In der Zeichnung zeigt
- Fig. 1: im Querschnitt einen Stromkollektor, der mit einer Brennstoffzelle in Verbindung steht und
- Fig. 2: im Querschnitt die Kontaktstelle des Kontaktelementes mit einer Elektrode einer Brennstoffzelle.

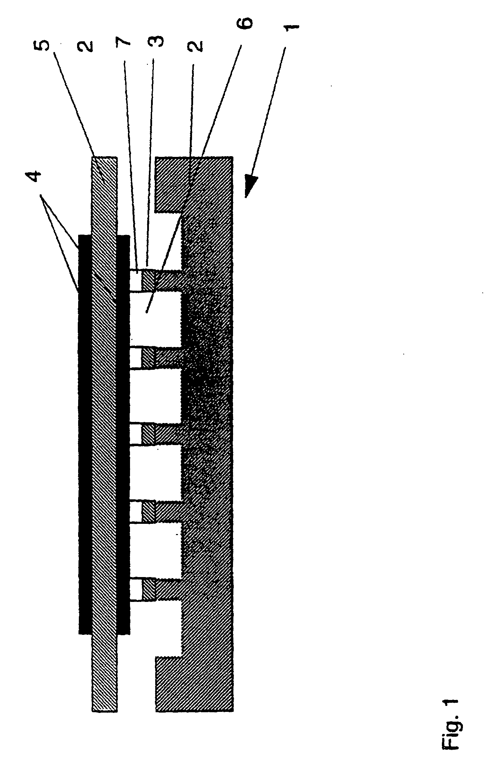

In Fig. 1 ist ein erfindungsgemäßer Stromkollektor 1 dargestellt, der einen Grundkörper 2 und mehrere Kontaktelemente 3 aufweist. Die Kontaktelemente 3 sind dabei in einer Richtung vom Grundkörper 2 abgewandt angeordnet, um in geeigneter Weise mit einer Elektrode 4 einer Brennstoffzelle, die einen Feststoffelektrolyten 5 aufweist, in Verbindung stehen zu können. Dadurch werden zudem Führungskanäle 6 für die Führung von Brennstoffen aufgespannt.

Erfindungsgemäß weist die Legierung des Grundkörpers 2, die erste Legierung, einen Aluminiumgehalt von mehr als 2,0 Masse-%. Dadurch wird gewährleistet, daß sich auf der Oberfläche des Grundkörpers 2 eine Al₂O₃-Schicht bildet, die ein Abdampfen von Chromoxiden verhindert.

Weiterhin weist die Legierung des Kontaktelementes 3, die zweite Legierung, einen Aluminiumgehalt von weniger als 2,0 Masse-%, insbesondere von weniger als 1,5 Masse-% und vorzugsweise von weniger als 1,0 Masse-% auf. Daher bildet sich an der Oberfläche des Kontaktelementes 3 keine elektrisch isolierende Al₂O₃-Schicht aus, so daß prinzipiell an den Kontaktelementen 3 Chromoxide austreten bzw. verdampfen können. Diese Verdampfung ist jedoch erheblich geringer als bei einem Stromkollektor, der vollständig aus einer Chromoxide abgebenden Legierung besteht.

Die Legierungen sowohl des Grundkörpers 2 als auch des Kontaktelementes 3 sind vorzugsweise hitzebeständige ferritische Legierungen.

Weiterhin sind die Kontaktelemente 3 des in Fig. 1 dargestellten Ausführungsbeispiels mit dem Grundkörper 2 des Stromkollektors 1 mittels Auftragschweißen verbunden. Somit wird eine stoffschlüssige Verbindung zwischen dem Kontaktelement 3 und dem Grundkörper 2 hergestellt.

Wie in Fig. 1 dargestellt ist, sind die Kontaktelemente 3 mittels einer Kontaktschicht 7 mit der Elektrode 4 der Brennstoffzelle verbunden, um eine auch bei unterschiedlich hohen Temperaturen ausreichende elektrisch leitende Verbindung sicherzustellen. Dabei deckt die Kontaktschicht 7 die Oberfläche des Kontaktelementes 3 von einer Seite ab. Somit sind nur die Seitenwände des Kontaktelementes 3 der Umgebungsatmosphäre ausgesetzt, in die Chromoxide abgegeben werden können.

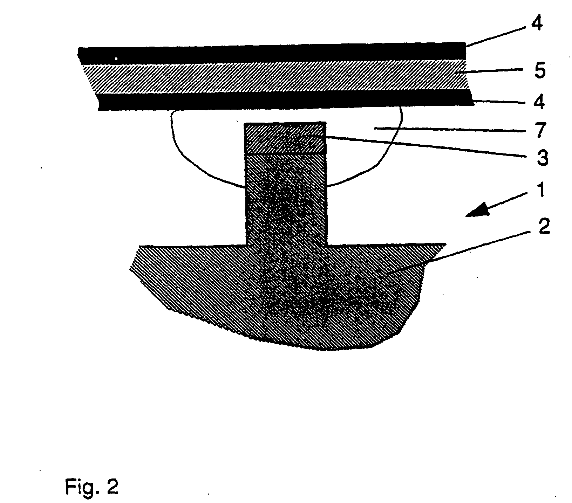

In Fig. 2 ist eine weitere Ausführungs form der Verbindung zwischen dem Kontaktelemente 3 und der Elektrode 4 dargestellt. Hier umschließt die Kontaktschicht 7 das Kontaktelement 3 von allen Seiten, so daß kein Abschnitt der Oberfläche des Kontaktelementes 3 mit der Umgebung in Berührung steht. In diesem Fall ist also in wirkungsvoller Weise gewährleistet, daß aus dem nur einen geringen Aluminiumanteil auf weisenden Kontaktelement 3 keine Chromoxide abgegeben werden können.

## Patentansprüche

1. Stromkollektor für einen SOFC-Brennstoffzellenstapel
- mit einem Grundkörper (2), der aus einer ersten hitzebeständigen ferritischen Legierung besteht, die Chrom enthält und einen Aluminiumgehalt von mehr als 2 Masse% aufweist,
- mit mindestens einem Kontaktelement (3), das aus einer zweiten hitzebeständigen ferritischen Legierung besteht, die Chrom enthält und einen Aluminiumgehalt von weniger als 2 Masse-% aufweist,
**dadurch gekennzeichnet,**
- **daß** Führungskanäle (6) für die Führung von Brennstoffen am Grundkörper (2) ausgebildet sind und
- **daß** das mindestens eine Kontaktelement (3) mit dem Grundkörper (2) am Ende eines eine Seitenwand eines Führungskanals (6) begrenzenden Steges des Grundkörpers (2) mittels einer stoffschlüssigen Verbindung verbunden ist.

2. Stromkollektor nach Anspruch 1, **dadurch gekennzeichnet, daß** die zweite Legierung einen Aluminiumgehalt von weniger als 1,5 Masse-%, vorzugsweise von weniger als 1,0 Masse-% enthält.

3. Brennstoffzellenstapel
- mit mindestens einer Elektroden (4) aufweisenden Brennstoffzelle,
- mit mindestens einem Stromkollektor (1) nach einem der Ansprüche 1 oder 2,
- wobei der Stromkollektor (1) über das mindestens eine Kontaktelement (3) mit einer der Elektroden (4) der Brennstoffzelle elektrisch leitend verbunden ist.

4. Brennstoffzellenstapel nach Anspruch 3, **dadurch gekennzeichnet, daß** das mindestens eine Kontaktelement (3) mit der Elektrode (4) über eine Kontaktschicht (7) verbunden ist, die vorzugsweise vollständig das Kontaktelement (3) umschließt.

5. Brennstoffzellenstapel nach Anspruch 4, daß die Kontaktschicht (7) aus einer Keramik besteht.

## Claims

1. A current collector for a solid oxide fuel cell stack,
- having a base (2) which is made from a first heat-resistant ferritic alloy which contains chromium and has an aluminium content of more than 2% by mass,
- having at least one contact element (3) which is made from a second heat-resistant ferritic alloy which contains chromium and has an aluminium content of less than 2% by mass,
**characterised in that**
- guide channels (6) for guiding fuels at the base (2) are constructed and
- the at least one contact element (3) is connected by means of a material connection to the base (2) at the/end of a web of the base (2) which delimits a side wall of a guide channel (6).

2. A current collector according to Claim 1, **characterised in that** the second alloy has an aluminium content of less than 1,5% by mass, preferably less than 1.0% by mass.

3. A fuel cell stack
- having at least one fuel cell having electrodes (4),
- having at least one current collector (1) according to one of Claims 1 or 2,
- the current collector (1) being electrically conductively connected to one of the electrodes (4) of the fuel cell by way of the at least one contact element (3).

4. A fuel cell stack according to Claim 3, **characterised in that** the at least one contact element (3) is connected to the electrode (4) by way of a contact layer (7) which preferably completely surrounds the contact element (3).

5. A fuel cell stack according to Claim 4, **characterised in that** the contact layer (7) is made from a ceramic.

## Revendications

1. Collecteur de courant pour un empilage de piles à combustible SOFC, comportant
- un corps de base (2) qui est constitué par un premier alliage ferritique thermorésistant, qui contient du chrome et possède une teneur en aluminium supérieure à 2 % en masse,
- au moins un élément de contact (3), qui est constitué par un second alliage ferritique thermorésistant, qui contient du chrome et possède une teneur en aluminium supérieure à 2 % en masse,
**caractérisé en ce**
- **que** des canaux de guidage (6) pour le guidage de combustible sont formés dans le corps de base (2), et
- **que** le au moins un élément de contact (3) est relié au corps de base (2) à l'extrémité d'une barrette du corps de base (2), qui limite une paroi latérale d'un canal de guidage (6), au moyen d'une liaison par matériaux.

2. Collecteur de courant selon la revendication 1, **caractérisé en ce que** le second alliage contient une teneur en aluminium inférieure à 1,5 % en masse, de préférence inférieure à 1,0 % en masse.

3. Empilage de piles à combustible comportant
- au moins une pile à combustible comportant des électrodes (4),
- au moins un collecteur de courant (1) selon l'une des revendications 1 ou 2,
- le collecteur de courant (1) étant relié d'une manière électriquement conductrice, par l'intermédiaire du au moins un élément de contact (3), à l'une des électrodes (4) de la pile à combustible.

4. Empilage de piles à combustible selon la revendication 3, **caractérisé en ce que** le au moins un élément de contact (3) est relié à l'électrode (4) par l'intermédiaire d'une couche de contact (7), qui enveloppe de préférence complètement l'élément de contact (3).

5. Empilage de piles à combustible selon la revendication 4, **caractérisé en ce que** la couche de contact (7) est formée d'une céramique.
